(19) Europäisches Patentamt / European Patent Office / Office européen des brevets

(11) **EP 4 760 429 A1**

(12) **EUROPEAN PATENT APPLICATION**
published in accordance with Art. 153(4) EPC

(43) Date of publication:
17.06.2026 Bulletin 2026/25

(21) Application number: 24851852.4

(22) Date of filing: 06.08.2024

(51) International Patent Classification (IPC):
*G05B 23/02* (2006.01)

(52) Cooperative Patent Classification (CPC):
G05B 23/02

(86) International application number:
PCT/JP2024/028084

(87) International publication number:
WO 2025/033429 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 08.08.2023 JP 2023129448

(71) Applicant: Daicel Corporation
Osaka-shi, Osaka 530-0011 (JP)

(72) Inventors:
• HAITSUKA, Masahiro
  Tokyo 108-8230 (JP)

• KUMATA, Kenji
  Tokyo 108-8230 (JP)
• KOMINE, Yusuke
  Tokyo 108-8230 (JP)
• TAKETSUGU, Yuki
  Tokyo 108-8230 (JP)
• NAKAI, Yoshito
  Tokyo 108-8230 (JP)

(74) Representative: Grünecker Patent- und
Rechtsanwälte
PartG mbB
Leopoldstraße 4
80802 München (DE)

(54) **PROCEDURE CREATION ASSISTANCE DEVICE, PROCEDURE CREATION ASSISTANCE METHOD, AND PROCEDURE CREATION ASSISTANCE PROGRAM**

(57) To assist determination of an operation condition in an unsteady operation of a plant. A procedure creation assistance device includes a processing unit that performs acquiring process data output in a past unsteady operation in a plant, creating a trained model that is trained with a relationship between an explanatory variable and a predetermined response variable by using regression analysis where the explanatory variable is a feature based on the process data, performing simulation using the trained model and an assumed value of the explanatory variable, outputting a condition serving as a predetermined constraint with respect to a regression coefficient of the trained model, a result of the simulation, and the explanatory variable, and modifying the trained model when an operation to modify the explanatory variable is received from a user or performing the simulation using a modified value of the assumed value when an operation to modify the assumed value is received from the user.

FIG. 2

**Description**

Technical Field

The present disclosure relates to a procedure creation assistance device, a procedure creation assistance method, and a procedure creation assistance program.

Background Art

An operation condition optimization system for a plant has been proposed in the related art (Patent Document 1). A measurement data recording unit of the system records, in a measurement DB, operation status data acquired by an operation status data acquisition unit and operation index data obtained by an operation index data acquisition unit as a series of measurement data associated based on predetermined criteria. Furthermore, a regression model creation unit creates a regression model by performing predetermined multivariate analysis using an operation status variable representing the operation status data side as an explanatory variable and an operation index variable representing the operation index data side as a response variable. In addition, an operation index variable optimization unit obtains an operation status variable that optimizes the operation index variable based on the regression model.

Citation List

Patent Document

Patent Document 1: JP 2012-74007 A

Summary of Invention

Technical Problem

For example, in an unsteady operation such as the start-up phase of a plant, that is, from the start of an operation to a steady operation, the causal relationship between the influence of an operation condition and the quality and cost of a product is complicated, and it is not easy to find out desirable operation conditions. Therefore, an objective of the present disclosure is to provide a technique for assisting in determining operation conditions for an unsteady operation of a plant.

Solution to Problem

A procedure creation assistance device according to the present disclosure can be embodied according to the following aspects.

(First Aspect)

A procedure creation assistance device including a processing unit,
the processing unit being configured to perform:

acquiring process data output in a past unsteady operation in a plant;
creating a trained model that is trained with a relationship between an explanatory variable and a predetermined response variable by using regression analysis where the explanatory variable is a feature based on the process data;
performing simulation using the trained model and an assumed value of the explanatory variable;
outputting a condition serving as a predetermined constraint with respect to a regression coefficient of the trained model, a result of the simulation, and the explanatory variable; and
modifying the trained model when an operation to modify the explanatory variable is received from a user or performing the simulation using a modified value of the assumed value when an operation to modify the assumed value is received from the user.

(Second Aspect)

In the procedure creation assistance device according to the first aspect, the processing unit may output the regression coefficient of the trained model or the absolute value of the regression coefficient as an index of the magnitude of the influence of the explanatory variable on a change in the predetermined response variable, the explanatory variable being multiplied by the regression coefficient in the trained model.

(Third Aspect)

In the procedure creation assistance device according to the first or second aspect, a condition serving as the predetermined constraint may include being within a range of the explanatory variable based on the process data output in the past unsteady operation.

(Fourth Aspect)

In the procedure creation assistance device according to any one of the first to third aspects, when designation of a sign of the regression coefficient is received from the user, the trained model may use a regularization term that increases cost when the sign of the regression coefficient is different from the designation by the user to perform regression analysis to minimize a cost function including the regularization term, and a condition serving as the predetermined constraint may include causal relationship information regarding a direction in which one of the explanatory variables is to be increased or decreased in order to change the predetermined response variable to a value in a steady operation of the plant.

(Fifth Aspect)

In the procedure creation assistance device according to the fourth aspect, the causal relationship information may include a plurality of pieces of information indicating a direction in which the explanatory variable is to be increased or decreased based on a different perspective.
Note that, the contents of Solution to Problem can be provided as a system including a device, such as a computer, or a plurality of devices, a method performed by the computer, or a program executed by the computer. Note that a recording medium that stores the program may be provided.

Advantageous Effects of Invention

According to the disclosed technique, a technique for assisting determination of operation conditions for an unsteady operation of a plant can be provided.

Brief Description of Drawings

FIG. 1 is a diagram illustrating an example of a system.
FIG. 2 is a block diagram illustrating an example of an information processing device.
FIG. 3 is a schematic diagram illustrating an example of a process performed by equipment included in a plant.
FIG. 4 is a diagram for explaining an example of process data in a batch stage.
FIG. 5 is a diagram for explaining an example of process data in a continuous stage.
FIG. 6 is a processing flow chart illustrating an example of a scenario creation assisting process performed by the information processing device.
FIG. 7 is a diagram for explaining an example of a schematic scenario.
FIG. 8 is a diagram showing examples of operation conditions.
FIG. 9 is a diagram illustrating examples of features.

Description of Embodiments

Hereinafter, an embodiment of an information processing device (procedure creation assistance device) will be described with reference to the drawings.

<Embodiment>

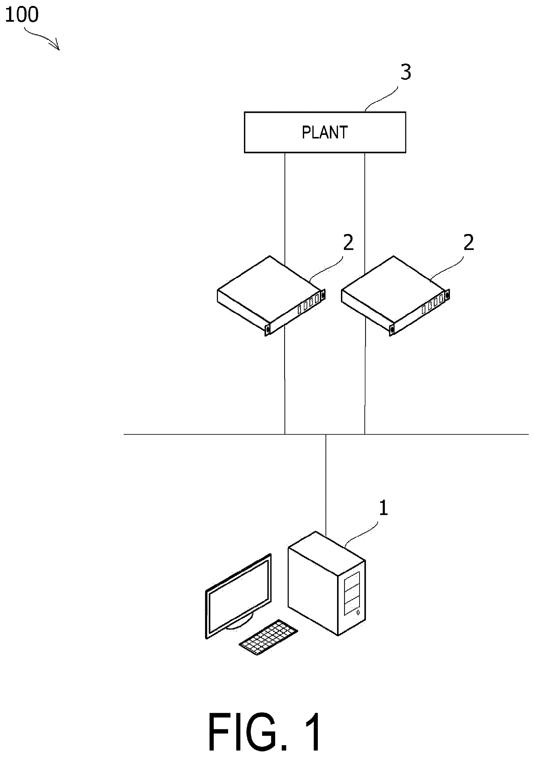

FIG. 1 is diagram illustrating an example of a system according to the present embodiment. A system 100 includes an information processing device 1, a control station 2, and a plant 3. The system 100 is, for example, a distributed control system (DCS) and includes a plurality of the control stations 2. That is, a control system of the plant 3 is divided into a plurality of sections, and each of the control sections in a distributed manner is controlled by the corresponding control station 2. The control station 2 is an existing facility in the DCS, receives status signals output from sensors or the like included in the plant 3, or outputs a control signal to the plant 3. In addition, actuators of valves or the like and other equipment included in the plant 3 are controlled based on the control signal. Further, the system 100 includes a plurality of plants 3. The plants 3 are, for example, chemical plants, and production plants or the like that produce products.

The information processing device 1 acquires status signals (process data) of the plant 3 via the control station 2. The process data includes temperatures, pressures, flow rates, and the like of targets to be processed such as raw materials, intermediate products, products, waste liquid, and wastewater, and also includes setting values and the like for determining operation conditions of equipment included in the plant 3. Then, the information processing device 1 creates a model for predicting the quality and the like of products based on at least a part of the acquired process data, and assists the determination of desirable operation conditions. For example, a regression model is created by using process data serving as a quality evaluation criterion as a response variable and using a feature serving as a candidate for a control target during a predetermined operation as an explanatory variable. Then, based on the created regression model, information for determining an operation to be performed in operation of the plant 3, a preferable control value, a target value, and the like is output.

<Device Configuration>

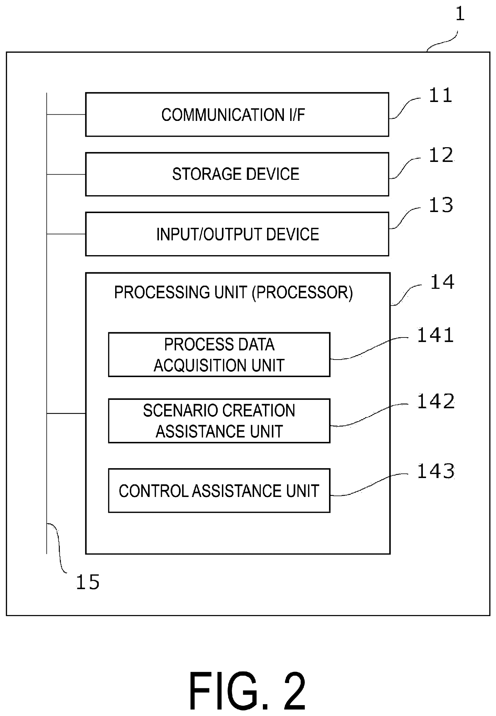

FIG. 2 is a block diagram illustrating an example of a configuration of the information processing device 1. The information processing device 1 is a computer, and includes a communication interface (I/F) 11, a storage device 12, an input/output device 13, and a processing unit (processor) 14. The communication I/F 11 may be, for example, a network card or a communication module and communicates with another computer based on a predetermined protocol. The storage device 12 may be a main storage device such as a Random Access Memory (RAM) or a Read Only Memory (ROM), and an auxiliary storage device (secondary storage device) such as a Hard-Disk Drive (HDD), a Solid State Drive (SSD), and a flash memory. The main storage device temporarily stores a program to be read by the processor 14 and information transmitted to and received from other computers and secures a work area of the processor 14. The auxiliary storage device stores a program to be executed by the processor 14 and information and the like transmitted to and received from other computers. The input/output device 13 is a user interface, which is, for example, an input device such as a keyboard and a mouse, an output device such as a monitor, an input/output device such as a touch panel, or the like. The processor 14 is an arithmetic processing device such as a central processing unit (CPU) and performs each type of processing according to the present embodiment by executing the program. In the example of FIG. 13, a functional block is illustrated in the processor 14. In other words, the processor 14 executes a predetermined program to function as a process data acquisition unit 141, a scenario creation assistance unit 142, and a control assistance unit 143.

The process data acquisition unit 141 acquires process data from the sensors included in the plant 3 via the communication I/F 11 and the control station 2 and stores the process data in the storage device 12. The scenario creation assistance unit 142 creates a prediction model for predicting a predetermined response variable based on past operation results of the plant. The prediction model can assist the creation of the scenario representing operation conditions at the time of the start of the operation of the plant 3. The control assistance unit 143 outputs information to the operator and controls equipment included in the plant 3 in response to operations by the operator. At this time, the scenario creation assistance unit 142 may predict the above-described response variable using the process data and the prediction model acquired from the plant 3. In addition, the control assistance unit 143 automatically controls operations of the plant 3 according to a predetermined scenario, or performs control in response to manual operations by a user especially during an unsteady operation.

The above components are connected via a bus 15.

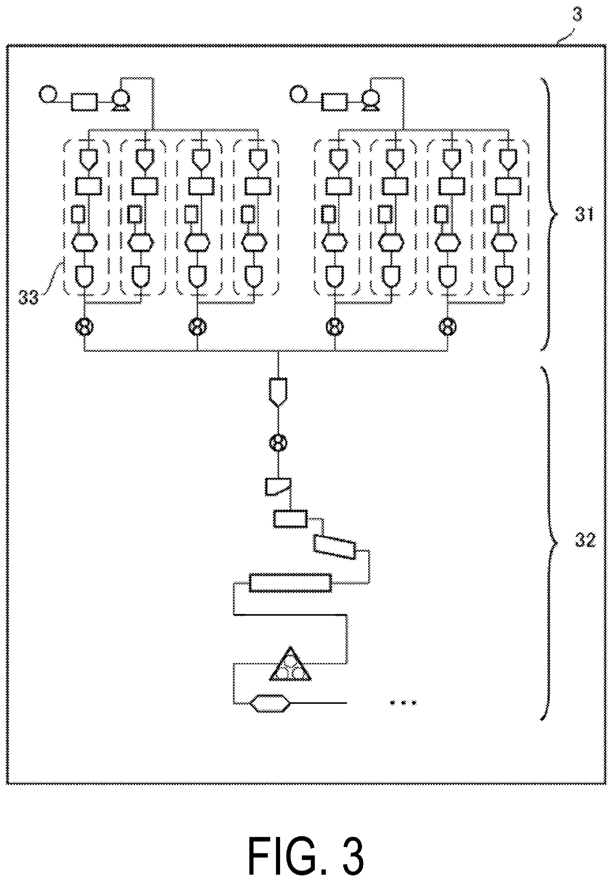

Further, each of the plants 3 outputs a plurality of pieces of process data. FIG. 3 is a schematic diagram illustrating an example of a process performed by equipment included in the plant 3. In the present embodiment, the process can include a batch stage 31 and a continuous stage 32. In the batch stage 31, processing targets are sequentially processed in predetermined processing units, and for example, processing operations such as reception, holding, and discharge of a raw material with respect to each piece of equipment are performed in order. In the continuous stage 32, processing targets stored in buffer tanks or the like are continuously processed, and for example, processing such as reception, holding, and discharge of raw materials are performed in parallel. Furthermore, the process can include a plurality of sequences 33 in which the same processing is performed in parallel.

The equipment for performing each type of processing includes, for example, a reactor, a distillation device, a heat exchanger, a compressor, a pump, a tank, and the like, and these are connected via pipes. Furthermore, sensors, valves, and the like are provided at predetermined positions of the equipment and the pipes. The sensors can include a thermometer, a flow meter, a pressure gauge, a level meter, a densitometer, or the like. Furthermore, each of the sensors monitors operation statuses of each piece of equipment and outputs status signals. Furthermore, the sensors included in the plant 3 have a "tag" attached thereto, which is identification information for identifying each of the sensors. In addition, the information processing device 1 and the control stations 2 manage input/output signals to each piece of equipment based on tags.

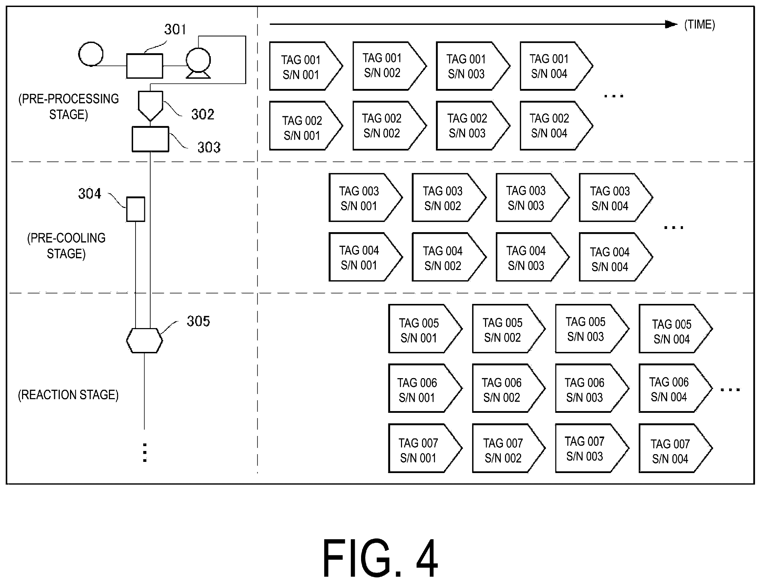

FIG. 4 is a diagram for explaining an example of process data in the batch stage. The left column of FIG. 4 indicates a part of the processes of the batch stage 31 illustrated in FIG. 3. Specifically, the plant 3 includes a shredder 301, a cyclone 302, pre-processing 303, a pre-cooler 304, and a reactor 305. Furthermore, these processes are classified into a pre-processing stage, a precooling stage, and a reaction stage. The right column in FIG. 4 indicates an example of process data acquired in each process. In the pre-processing stage, time-series data are acquired from sensors with tags 001 and 002. In the precooling stage, time-series data are acquired from sensors with tags 003 and 004. In the reaction stage, time-series data are acquired from sensors with tags 005, 006, and 007. Furthermore, in the batch stage, processing targets associated with product serial numbers (also referred to as "S/N") are intermittently processed. That is, the product serial numbers are identification information for identifying the processing targets to be collectively processed in the batch stage. As illustrated in FIG. 4, time-series data related to the processing targets associated with the subsequent product serial numbers are obtained over time.

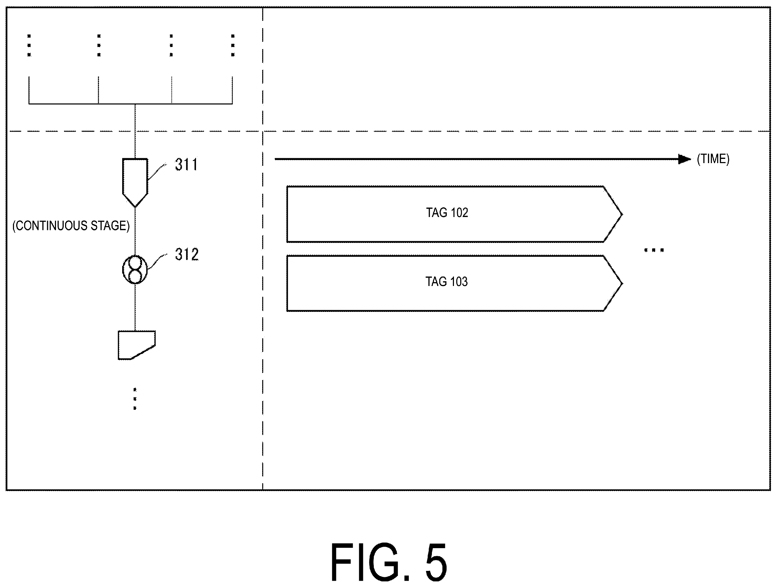

FIG. 5 is a diagram for explaining an example of the process data in the continuous stage. The left column of FIG. 5 indicates a part of the processes of the continuous stage 32 illustrated in FIG. 3. Specifically, the plant 3 includes a tank 311 and a pump 312. The right column in FIG. 5 indicates an example of process data acquired in each process. In the continuous stage 32, time-series data that are associated with the tags but not associated with the product serial numbers are continuously acquired from the sensors. In the example of FIG. 5, time-series data are acquired from the sensors with the tags 102 and 103. In the continuous stage, the equipment continuously receives processing targets and continuously performs processing. When the batch stage and the continuous stage are performed consecutively, processing targets in the batch stage may be associated with processing targets in the continuous stage. For example, the product serial numbers in the batch stage and the process data in the continuous stage are associated with each other based on sampling intervals of the sensors and the time during which the processing targets stay between the batch stage and the continuous stage.

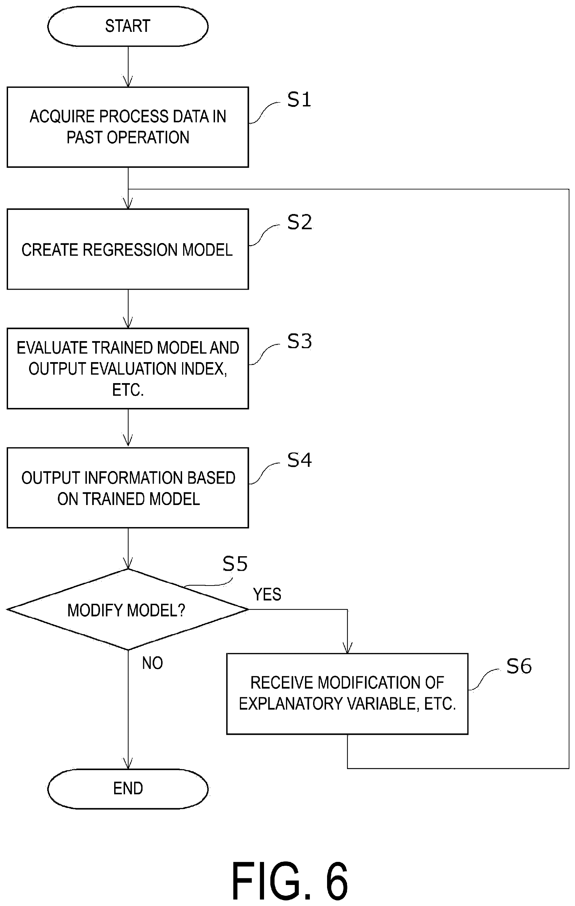

FIG. 6 is a processing flow chart showing an example of a scenario creation assisting process performed by the information processing device 1 in the unsteady operation. As an example of the unsteady operation, a start-up process from the start of an operation of the plant 3 to the steady operation for stably manufacturing a product will be described in the present embodiment. In addition, control is performed in the start-up process such that the concentration of unreacted raw materials in the products manufactured in the plant 3 satisfies a predetermined standard and the process transitions to the steady operation after the concentration of the unreacted raw materials in the product satisfies the predetermined standard.

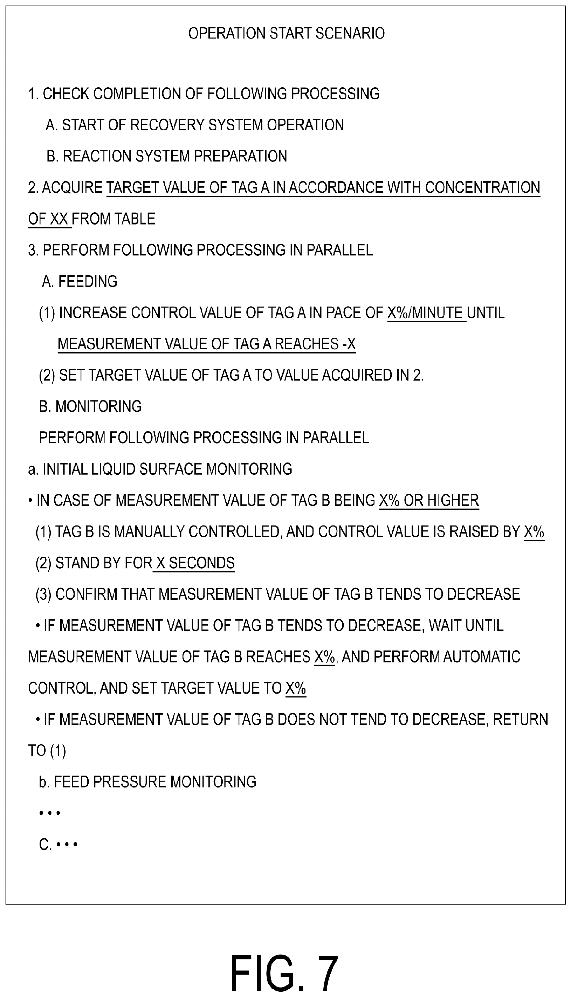

FIG. 7 is a diagram for explaining an example of a schematic scenario. The scenario is, for example, a procedure manual created by a user, a program for controlling the plant 3 may be created according to the scenario for at least some of stages, or the scenario may be used for an operator to refer to at the time of operation. The scenario of FIG. 7 includes stages of setting a target value according to a measurement value (concentration) of a processing target, changing a control value to a predetermined target value at a predetermined speed, changing a target value or a control value according to a measurement value, standing by for a predetermined period, and the like. In addition, a skeleton of the scenario can be created based on the principle of the reaction process. However, especially in the unsteady operation, it is not easy to determine which measurement value should be used for the control, and to find out a target value of the feedback control underscored in FIG. 7 and a preferable value such as a change amount per unit time of the control value. In the scenario creation assisting process shown in FIG. 6, information useful for scenario creation is presented. Specifically, the user can determine a preferable value of the explanatory variable for bringing the response variable, which is, for example, the concentration of the unreacted raw materials in the products, close to a value satisfying a predetermined condition, or can identify an explanatory variable having a large influence on a fluctuation of the response variable based on the magnitude of the coefficient of the explanatory variable, using the regression model described above.

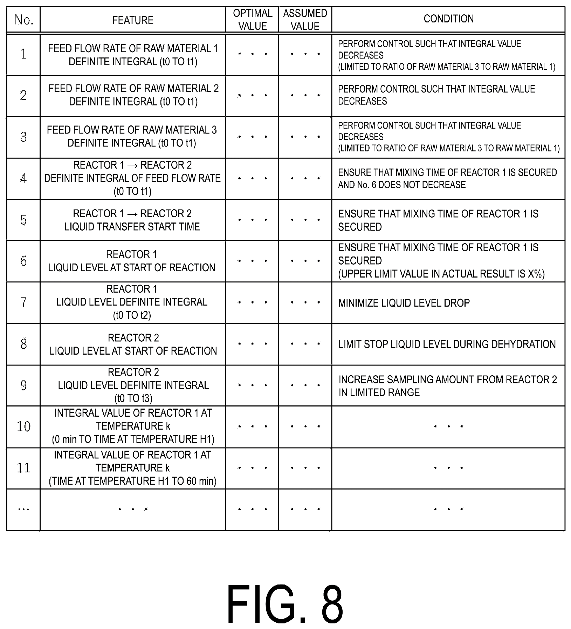

FIG. 8 is a diagram showing examples of operation conditions. Such operation conditions can be created in advance by a user based on the principles of the reaction process, the knowledge of the operator, and the past operation results. The table of FIG. 8 includes attributes of "No.", "feature", "optimal value", "assumed value", and "condition". In the field for "No.", the identification numbers of the features are registered. In the field for "feature", the definitions of the features that can affect a change in the response variables, which are concentrations of the unreacted raw materials in the product, are registered. The features are those that can be used as explanatory variables in the regression model. Note that the features may be values that change over time, such as process data in a predetermined period or values corresponding to the process data. In addition, in the field for "optimal value", optimal values are registered based on, for example, principles related to chemical reactions. Note that, for the features, having the conditions on which a trade-off occurs with other features, a value used for simulation may be set within a range of a value, a ratio, or the like of past operation results, from the viewpoint of the stability of the reactions, or the like. In the field for "assumed value", assumed values that are values used for simulation are registered. That is, when individual features are a new operation condition as a combination of a plurality of features even if they are each an optimal value, it may be desirable to set an assumed value within a range of a past operation result or to gradually bring the values close to the optimal values. Therefore, simulation using the regression model is performed using the assumed values. In the field for "condition", a condition that is a constraint when control is performed is registered. Note that the condition may include a condition on which a trade-off occurs for a plurality of features. The trade-off refers to a relationship that a direction in which one of the explanatory variables is to be increased or decreased is not uniquely determined in a relationship with another explanatory variable, for example, in order to bring the response variable, which is a concentration of an unreacted raw material in a product, close to a value in the steady operation of the plant 3. The user sets an assumed value in consideration of the condition. For example, when a feed flow rate of raw material 1 being the minimum and a feed flow rate of raw material 3 being the maximum are the theoretical optimal values, a limitation based on the operation result may be established on the ratio of the feed flow rate of raw material 1 to the feed flow rate of raw material 3 as a condition as shown in FIG. 8 (No. 1 and No. 3), and an assumed value according to the limitation may be set. Further, as shown in the condition of the heights of liquid levels at the start of the reaction in the reactor 1 in FIG. 8 (No. 6), an upper limit may be established with a margin remaining for the operation result, and an assumed value satisfying the condition may be set.

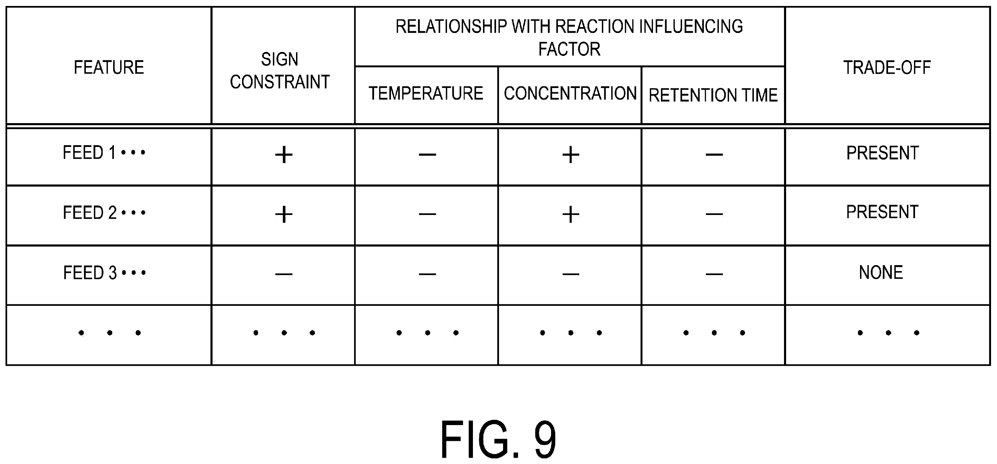

FIG. 9 is a diagram illustrating examples of features stored in a storage device 12. Records of the table shown in FIG. 9 are prepared for the features shown in FIG. 8. The table of FIG. 9 includes attributes of "feature", "sign constraint", "relationship with reaction influencing factor" ("temperature", "concentration", and "retention time"), and "trade-off". In the field for "feature", information corresponding to the features in FIG. 8 is registered. In the field for "sign constraint", information indicating the sign of a coefficient of each feature (explanatory variable) to be set in the regression equation is registered. Note that it is understood that, when the amount of training data is sufficient, the coefficient of the explanatory variable in the regression equation can be estimated (converged) to have an appropriate sign according to the relationship between the response variable and the explanatory variable. However, when the amount of training data is small, it may be difficult to obtain the coefficient with an appropriate sign. By performing regression analysis with the sign constraint imposed, an appropriate regression equation can be created even when the amount of training data is small. That is, the information processing device 1 performs regression analysis based on the information registered in the field for "sign constraint". Note that the regression analysis with sign constraint imposed can be performed by using a known method disclosed in, for example, WO 2021/157669. That is, when designation of the sign constraint is imposed, the regression model performs regression analysis using a regularization term that increases the cost when the sign of the regression coefficient is different from the sign designated in the sign constraint, to minimize a cost function including the regularization term.

The field for "relationship with reaction influencing factor" stores signs each indicating the direction that the response variable changes to increase or decrease when the corresponding feature increases. "+" represents an increase, and "-" indicates a decrease. Conversely, when the feature decreases, "-" indicates that the response variable increases, and "+" indicates that the response variable decreases. The signs registered in the "relationship with reaction influencing factor" are set by the user by analyzing the signs for the perspectives of temperature, concentration, and retention time based on the principles of chemical reactions. If the same sign is registered for these three perspectives, it can be determined that the direction of increase or decrease of the response variable (that is, the sign registered in the field for "sign constraint") is confirmed with regard to the change of increase or decrease of the feature represented by the record. The regression equation in the regression analysis with the sign constraint imposed is represented by, for example, the following equation (1).

[Math. 1]

$$\mu = w_0 + \sum_{k=1}^{K} w_k x_k \qquad \cdots \quad (1)$$

Note that $w_k$ is a regression coefficient, and $w_0$ is a constant term. Furthermore, $w_k$ is determined in accordance with a predetermined constraint sign. In determining the regression coefficient and the constant term, a cost function represented by the following equation (2) can be used. Selection of a coefficient $w_k$ that minimizes the cost function $E(w)$ leads to determination of a regression equation.

[Math. 2]

$$E(\mathbf{w}) = \frac{1}{2} \sum_{t=1}^{T} \left[ y(t) - \left( \sum_{k=1}^{K} w_k x_k(t) + w_0 \right) \right]^2 + \alpha R \qquad \cdots \quad (2)$$

where

$$R = \sum_{k \in \Omega_+} R_+(w_k) + \sum_{k \in \Omega_-} R_-(w_k)$$

$$R_+\left(w\right)=\begin{cases}0 & w\geq 0\\-w & w<0\end{cases}$$

$$R_-\left(w\right)=\begin{cases}+w & w\geq 0\\0 & w<0\end{cases}$$

$\alpha R$ is a regularization term (penalty term), and a coefficient $\alpha$ thereof is a parameter representing a strength of a constraint. When "+" is registered in the "relationship with reaction influencing factor", the value of $R_+(w)$ is taken, and when "-" is registered, the value of $R_-(w)$ is taken. In this manner, the regularization term $\alpha R$ according to the present embodiment imposes a sign constraint by type L1 regularization on either the positive or negative side. That is, the regularization term increases the cost in proportion to the sum of absolute values of coefficients $w_k$ in either the positive or negative section corresponding to the constrained sign.

The field for "trade-off" stores information indicating whether a preferable change direction is not uniquely determined (a trade-off is present) in the entire unsteady process in relation to other processes. For the feature with a trade-off being "present", the user may alter the information of the sign constraint and recreate the regression model. The information held in the table of FIG. 9 can be determined in advance based on, for example, the principles shown in FIG. 8 or the knowledge of the operator. The storage device 12 stores, in advance, the definitions of the features as illustrated in FIG. 9.

In the process of FIG. 6, first, the process data acquisition unit 141 of the information processing device 1 reads the process data output by the plant 3 in the past operation (S1 of FIG. 6). The process data to be read is the process data in the above-described unsteady operation. In particular, it is preferable to use process data of a case in which the process has proceeded with no abnormalities or defects. In addition, the scenario creation assistance unit 142 of the information processing device 1 performs machine learning using the read process data (S2 of FIG. 6). The machine learning may use a method using a regularization term, for example, linear regression, Ridgge regression, or Lasso regression, or a method similar to these. In addition, a regression model may be created based on the above-described sign constraint. The response variable of the regression model is, for example, the concentration of an unreacted raw material in the product manufactured in the plant 3. In addition, the explanatory variables of the regression model are at least some of the features shown in FIGS. 8 and 9, and are pre-set by the user, for example. The explanatory variables may be the process data itself, or may be some values obtained according to the process data, such as the integral value of a flow rate. The explanatory variables may be a target value or a control value in the procedure of the expected unsteady operation, or a candidate for a measurement value, a standby time, or the like serving as starting conditions (triggers) for the process, as shown in FIG. 7, for example. In addition, the explanatory variables may be an integral value of the control values or measurement values such as the flow rates, the heights of liquid levels shown in FIG. 8. Based on the regression model with the integral value as an explanatory variable, the user can determine the speed at which the flow rate or the height of the liquid level is changed in the procedure of the unsteady operation, for example.

In addition, the scenario creation assistance unit 142 evaluates the trained model (S3 in FIG. 6). The scenario creation assistance unit 142 uses, for example, a part of the process data acquired in S1 as data for verification to obtain an evaluation index such as coefficients of determination. The calculated evaluation index is output via the input/output device 13.

In addition, the scenario creation assistance unit 142 outputs information for creating a scenario representing operation conditions for each piece of equipment of the plant 3 in the unsteady operation based on the trained model (S4 in FIG. 6). The trained model is, for example, a regression equation in which a regression coefficient (partial regression coefficient) and an intercept are determined by regression analysis. Simulation is performed using the trained model and the optimal values or the assumed values of the explanatory variables, and a preferable value of the explanatory variable for quickly setting, for example, the concentration of the unreacted raw material in the product, which is the response variable, to a desired threshold value or less can be obtained and output. In S4, the scenario creation assistance unit 142 may perform prediction using the trained model particularly for the features (explanatory variables) having conditions on which a trade-off occurs, and present the result to the user. The simulation is executed based on, for example, the "assumed value" in FIG. 8. The user can set assumed values and execute the simulation satisfying the "condition" and "optimal value" shown in FIG. 8. For example, in order to change the response variable, which is the concentration of the unreacted raw material in the product, to a value during the steady operation of the plant 3, it is possible to predict what assumed value the explanatory variable should be set to by repeating the simulation with a modified assumed value one after another. Based on the preferable assumed value obtained here, the user can determine a control value, a target value, and the like to be set in the scenario. In addition, it can be said that the size of the absolute value of the coefficients of the regression model represents the magnitude of the influence on the change in the response variable. Therefore, if the regression coefficients or values based on the regression coefficients such as absolute values thereof are output in the S4, the user can make choices on explanatory variables to be changed in the operation procedure based on the comparison of the regression coefficients. The user may change the assumed values of the explanatory variables to recreate the regression model. In addition, the sign of a regression coefficient represents the correspondence relationship between the control of increasing or decreasing the explanatory variables and the direction (of increase or decrease) in which the response variable fluctuates. When the regression coefficient or the sign thereof is output in S4, the user can understand the correspondence relationship. In addition, the user may modify the information of the sign constraint and recreate the regression model, particularly for the feature with a trade-off being "present" in FIG. 9 based on the result of the simulation.

Note that, in general, when there is multicollinearity, the size of the coefficient does not necessarily indicate the magnitude of the influence on the response variable. On the other hand, in the regression equation according to the present embodiment, the prediction accuracy is equivalent between the case where a combination of explanatory variables having a correlation coefficient of 0.9 or more are included and the case where one of the combinations is deleted. That is, it is understood that, when the sign of the regression coefficient is different from the sign designated in the "sign constraint" described above, the regularization term that increases the cost is used, and thus, convergence to a more appropriate coefficient can be given, and the issue of the multicollinearity can be solved.

Further, the scenario creation assistance unit 142 determines whether to modify the model (S5 in FIG. 6). In this step, the scenario creation assistance unit 142 receives, via the input/output device 13, information indicating whether to change the explanatory variables and the sign constraint in response to, for example, a user operation, and determines whether to modify the model based on the input. If it is determined that the model is to be modified (S5: YES), the scenario creation assistance unit 142 receives selection of the explanatory variable to be used for the regression model and modification of the sign constraint (S6 in FIG. 6), and returns to S1 to repeat the processing.

<Effects>

According to the present embodiment, the scenario creation assistance unit 142 can assist the user in creating a regression model based on the magnitude of the influence of the features (explanatory variables) on the change in the response variable. In addition, when changes in a plurality of explanatory variables have a trade-off relationship with each other and affect the result of the entire unsteady processing, it is possible to put priority to how to change (that is, increase or decrease) the explanatory variables to improve the prediction accuracy of the regression model by performing the regression analysis using the process data related to the past operation results. For example, in order to reduce unreacted raw materials in a product, for example, when the initial liquid level in the reactor, which is one of the features, is raised by increasing the initial loading amount of a solvent into the reactor, in principle, the raw material concentration in the reactor decreases, making it difficult to react, while the reaction time becomes longer, resulting in facilitating a sufficient reaction. By using the training model of the present embodiment, it is possible to comprehensively determine which causal relationship is prioritized and present the determined causal relationship. Further, the user can create a preferable operation scenario in the unsteady operation based on the created regression model. Note that the control assistance unit 143 controls the plant 3 based on a program for performing an operation following a scenario. In the unsteady operation, the control assistance unit 143 may receive a manual operation of the user via the input/output device 13.

<Modified Examples>

Each of the configurations, combinations thereof, and the like in each of the embodiments is an example, and various additions, omissions, substitutions, and other changes of the configurations may be made as appropriate without departing from the spirit of the present disclosure. The present disclosure is not limited by the embodiment and is limited only by the claims. Each embodiment disclosed in the present specification can be combined with any other feature disclosed herein.

In addition, at least some of the functions of the information processing device 1 may be implemented by being distributed in a plurality of devices, or the same function may be provided by a plurality of devices in parallel. For example, a device that functions as the scenario creation assistance unit 142 may differ from a device that functions as the control assistance unit 143. At least some of the functions of the information processing device 1 may be provided on a so-called cloud.

Although the processing during the start-up of the plant has been described in the embodiment, the unsteady operation may be processing during a stop of the plant or processing of changing the production amount per unit time. In this case, the processing can be performed according to a predetermined scenario as well.

As shown in FIG. 8, for features in the embodiment, a definite integral value of a feed flow rate which is a flow rate at which a raw material is transferred to a predetermined reactor, a transfer start time between two reactors, the height of a liquid level of a reactor at the start of a reaction, a definite integral value of the height of the liquid level of a predetermined reactor, an integral value of the absolute temperature of a predetermined reactor, or the like can be used. However,

EP 4 760 429 A1

features are not limited to the examples shown in FIG. 8. For example, various values based on process data, such as a difference in feed start time between a first raw material and a second raw material, the definite integral value of a flow rate of cooling water of the reactor, and the integral value of the absolute temperature of cooling water of the reactor, can be used. Further, a response variable is not limited to a concentration of an unreacted raw material in FIG. 8 (that is, the concentration of the unreacted raw material after a predetermined time from the start of the reaction). For example, a response variable may be a time until the concentration of the unreacted raw material reaches a predetermined standard, the concentration of impurities in a product, a product physical property value, the amount of a raw material used, the amount of energy used, the amount of discharge from the system, or other values.

Furthermore, the present disclosure includes a method and a computer program for performing the aforementioned processing, and a computer readable recording medium storing the program. The recording medium on which the program is stored enables the aforementioned processing by causing a computer to execute the program.

The computer readable recording medium refers to a recording medium that can accumulate information such as data or programs by electrical, magnetic, optical, mechanical, or chemical actions and can be read from a computer. Among such recording media, examples of recording media detachable from a computer include flexible disks, magneto-optical disks, optical discs, magnetic tapes, memory cards, and the like. Furthermore, as recording media fixed to a computer, there are HDD, solid state drive (SSD), ROM, and the like.

Reference Signs List

100: System
1: Information processing device
2: Control station
3: Plant
11: Communication I/F
12: Storage device
13: Input/output device
14: Processing unit (processor)
141: Process data acquisition unit
142: Scenario creation assistance unit
143: Control assistance unit

Claims

1. A procedure creation assistance device comprising a processing unit,
   the processing unit being configured to perform:

   acquiring process data output in a past unsteady operation in a plant;
   creating a trained model that is trained with a relationship between an explanatory variable and a predetermined response variable by using regression analysis where the explanatory variable is a feature based on the process data;
   performing simulation using the trained model and an assumed value of the explanatory variable;
   outputting a condition serving as a predetermined constraint with respect to a regression coefficient of the trained model, a result of the simulation, and the explanatory variable; and
   modifying the trained model when an operation to modify the explanatory variable is received from a user or performing the simulation using a modified value of the assumed value when an operation to modify the assumed value is received from the user.

2. The procedure creation assistance device according to claim 1, wherein the processing unit outputs the regression coefficient of the trained model or a value based on the regression coefficient as an index of a magnitude of influence of the explanatory variable on a change in the predetermined response variable, the explanatory variable being multiplied by the regression coefficient in the trained model.

3. The procedure creation assistance device according to claim 2,
   wherein

when designation of a sign of the regression coefficient is received from the user, the trained model uses a regularization term that increases cost when the sign of the regression coefficient is different from the designation by the user to perform regression analysis to minimize a cost function including the regularization term, and a condition serving as the predetermined constraint includes causal relationship information regarding a direction in which one of the explanatory variables is to be increased or decreased in order to change the predetermined response variable to a value in a steady operation of the plant.

4. The procedure creation assistance device according to claim 3, wherein the causal relationship information includes a plurality of pieces of information indicating a direction in which the explanatory variable is to be increased or decreased based on a different perspective.

5. The procedure creation assistance device according to claim 1, wherein a condition serving as the predetermined constraint includes being within a range of the explanatory variable based on the process data output in the past unsteady operation.

6. A procedure creation assistance method for enabling one or more computers to perform:

   acquiring process data output in a past unsteady operation in a plant;
   creating a trained model that is trained with a relationship between an explanatory variable and a predetermined response variable by using regression analysis where the explanatory variable is a feature based on the process data;
   performing simulation using the trained model and an assumed value of the explanatory variable;
   outputting a condition serving as a predetermined constraint with respect to a regression coefficient of the trained model, a result of the simulation, and the explanatory variable; and
   modifying the trained model when an operation to modify the explanatory variable is received from a user or performing the simulation using a modified value of the assumed value when an operation to modify the assumed value is received from the user.

7. A procedure creation assistance program that causes a computer to perform:

   acquiring process data output in a past unsteady operation in a plant;
   creating a trained model that is trained with a relationship between an explanatory variable and a predetermined response variable by using regression analysis where the explanatory variable is a feature based on the process data;
   performing simulation using the trained model and an assumed value of the explanatory variable;
   outputting a condition serving as a predetermined constraint with respect to a regression coefficient of the trained model, a result of the simulation, and the explanatory variable; and
   modifying the trained model when an operation to modify the explanatory variable is received from a user or performing the simulation using a modified value of the assumed value when an operation to modify the assumed value is received from the user.

FIG. 1

1

COMMUNICATION I/F ⌐ 11

STORAGE DEVICE ⌐ 12

INPUT/OUTPUT DEVICE ⌐ 13

PROCESSING UNIT (PROCESSOR) ⌐ 14

PROCESS DATA
ACQUISITION UNIT ⌐ 141

SCENARIO CREATION
ASSISTANCE UNIT ⌐ 142

CONTROL ASSISTANCE UNIT ⌐ 143

15

# FIG. 2

FIG. 3

(PRE-PROCESSING STAGE)

301
302
303

(PRE-COOLING STAGE)

304

(REACTION STAGE)

305

(TIME)

TAG 001 S/N 001 | TAG 001 S/N 002 | TAG 001 S/N 003 | TAG 001 S/N 004
TAG 002 S/N 001 | TAG 002 S/N 002 | TAG 002 S/N 003 | TAG 002 S/N 004

TAG 003 S/N 001 | TAG 003 S/N 002 | TAG 003 S/N 003 | TAG 003 S/N 004
TAG 004 S/N 001 | TAG 004 S/N 002 | TAG 004 S/N 003 | TAG 004 S/N 004

TAG 005 S/N 001 | TAG 005 S/N 002 | TAG 005 S/N 003 | TAG 005 S/N 004
TAG 006 S/N 001 | TAG 006 S/N 002 | TAG 006 S/N 003 | TAG 006 S/N 004
TAG 007 S/N 001 | TAG 007 S/N 002 | TAG 007 S/N 003 | TAG 007 S/N 004

FIG. 4

FIG. 5

EP 4 760 429 A1

START

ACQUIRE PROCESS DATA IN PAST OPERATION — S1

CREATE REGRESSION MODEL — S2

EVALUATE TRAINED MODEL AND OUTPUT EVALUATION INDEX, ETC. — S3

OUTPUT INFORMATION BASED ON TRAINED MODEL — S4

MODIFY MODEL? — S5

YES

NO

RECEIVE MODIFICATION OF EXPLANATORY VARIABLE, ETC. — S6

END

# FIG. 6

OPERATION START SCENARIO

1. CHECK COMPLETION OF FOLLOWING PROCESSING

    A. START OF RECOVERY SYSTEM OPERATION

    B. REACTION SYSTEM PREPARATION

2. ACQUIRE <u>TARGET VALUE OF TAG A IN ACCORDANCE WITH CONCENTRATION OF XX</u> FROM TABLE

3. PERFORM FOLLOWING PROCESSING IN PARALLEL

  A. FEEDING

  (1) INCREASE CONTROL VALUE OF TAG A IN PACE OF <u>X%/MINUTE</u> UNTIL

    <u>MEASUREMENT VALUE OF TAG A REACHES -X</u>

  (2) SET TARGET VALUE OF TAG A TO VALUE ACQUIRED IN 2.

  B. MONITORING

  PERFORM FOLLOWING PROCESSING IN PARALLEL

a. INITIAL LIQUID SURFACE MONITORING

• IN CASE OF MEASUREMENT VALUE OF TAG B BEING <u>X% OR HIGHER</u>

  (1) TAG B IS MANUALLY CONTROLLED, AND CONTROL VALUE IS RAISED BY <u>X%</u>

  (2) STAND BY FOR <u>X SECONDS</u>

  (3) CONFIRM THAT MEASUREMENT VALUE OF TAG B TENDS TO DECREASE

  • IF MEASUREMENT VALUE OF TAG B TENDS TO DECREASE, WAIT UNTIL MEASUREMENT VALUE OF TAG B REACHES <u>X%</u>, AND PERFORM AUTOMATIC CONTROL, AND SET TARGET VALUE TO <u>X%</u>

  • IF MEASUREMENT VALUE OF TAG B DOES NOT TEND TO DECREASE, RETURN TO (1)

  b. FEED PRESSURE MONITORING

  • • •

  C. • • •

# FIG. 7

| No. | FEATURE | OPTIMAL VALUE | ASSUMED VALUE | CONDITION |
|---|---|---|---|---|
| 1 | FEED FLOW RATE OF RAW MATERIAL 1 DEFINITE INTEGRAL (t0 TO t1) | · · · | · · · | PERFORM CONTROL SUCH THAT INTEGRAL VALUE DECREASES (LIMITED TO RATIO OF RAW MATERIAL 3 TO RAW MATERIAL 1) |
| 2 | FEED FLOW RATE OF RAW MATERIAL 2 DEFINITE INTEGRAL (t0 TO t1) | · · · | · · · | PERFORM CONTROL SUCH THAT INTEGRAL VALUE DECREASES |
| 3 | FEED FLOW RATE OF RAW MATERIAL 3 DEFINITE INTEGRAL (t0 TO t1) | · · · | · · · | PERFORM CONTROL SUCH THAT INTEGRAL VALUE DECREASES (LIMITED TO RATIO OF RAW MATERIAL 3 TO RAW MATERIAL 1) |
| 4 | REACTOR 1 → REACTOR 2 DEFINITE INTEGRAL OF FEED FLOW RATE (t0 TO t1) | · · · | · · · | ENSURE THAT MIXING TIME OF REACTOR 1 IS SECURED AND No. 6 DOES NOT DECREASE |
| 5 | REACTOR 1 → REACTOR 2 LIQUID TRANSFER START TIME | · · · | · · · | ENSURE THAT MIXING TIME OF REACTOR 1 IS SECURED |
| 6 | REACTOR 1 LIQUID LEVEL AT START OF REACTION | · · · | · · · | ENSURE THAT MIXING TIME OF REACTOR 1 IS SECURED (UPPER LIMIT VALUE IN ACTUAL RESULT IS X%) |
| 7 | REACTOR 1 LIQUID LEVEL DEFINITE INTEGRAL (t0 TO t2) | · · · | · · · | MINIMIZE LIQUID LEVEL DROP |
| 8 | REACTOR 2 LIQUID LEVEL AT START OF REACTION | · · · | · · · | LIMIT STOP LIQUID LEVEL DURING DEHYDRATION |
| 9 | REACTOR 2 LIQUID LEVEL DEFINITE INTEGRAL (t0 TO t3) | · · · | · · · | INCREASE SAMPLING AMOUNT FROM REACTOR 2 IN LIMITED RANGE |
| 10 | INTEGRAL VALUE OF REACTOR 1 AT TEMPERATURE k (0 min TO TIME AT TEMPERATURE H1) | · · · | · · · | · · · |
| 11 | INTEGRAL VALUE OF REACTOR 1 AT TEMPERATURE k (TIME AT TEMPERATURE H1 TO 60 min) | · · · | · · · | · · · |
| ... | · · · | · · · | · · · | · · · |

# FIG. 8

| FEATURE | SIGN CONSTRAINT | RELATIONSHIP WITH REACTION INFLUENCING FACTOR | | | TRADE-OFF |
|---|---|---|---|---|---|
| | | TEMPERATURE | CONCENTRATION | RETENTION TIME | |
| FEED 1 ··· | + | — | + | — | PRESENT |
| FEED 2 ··· | + | — | + | — | PRESENT |
| FEED 3 ··· | — | — | — | — | NONE |
| · · · | · · · | · · · | · · · | · · · | · · · |

# FIG. 9

EP 4 760 429 A1

## INTERNATIONAL SEARCH REPORT

| International application No. |
| --- |
| **PCT/JP2024/028084** |

**A. CLASSIFICATION OF SUBJECT MATTER**

*G05B 23/02*(2006.01)i
FI:  G05B23/02 G

According to International Patent Classification (IPC) or to both national classification and IPC

**B. FIELDS SEARCHED**

Minimum documentation searched (classification system followed by classification symbols)

G05B23/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 7207596 B1 (FUJI ELECTRIC CO., LTD.) 18 January 2023 (2023-01-18) entire text, all drawings | 1-7 |
| A | JP 2023-35073 A (YOKOGAWA ELECTRIC CORP.) 13 March 2023 (2023-03-13) entire text, all drawings | 1-7 |
| A | JP 7-319508 A (HITACHI, LTD.) 08 December 1995 (1995-12-08) entire text, all drawings | 1-7 |

☐ Further documents are listed in the continuation of Box C.　　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 September 2024** | **24 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2024/028084**

| Patent document cited in search report | | | Publication date (day/month/year) | Patent family member(s) | | | Publication date (day/month/year) |
|---|---|---|---|---|---|---|---|
| JP | 7207596 | B1 | 18 January 2023 | JP | 2023-183577 | A | |
| JP | 2023-35073 | A | 13 March 2023 | US | 2023/0061033 | A1 | |
| | | | | DE | 102022208870 | A1 | |
| | | | | CN | 115729172 | A | |
| JP | 7-319508 | A | 08 December 1995 | JP | 3-15902 | A | |
| | | | | JP | 7-319509 | A | |
| | | | | JP | 10-91208 | A | |
| | | | | US | 5774633 | A | |
| | | | | US | 5845052 | A | |
| | | | | US | 5943662 | A | |
| | | | | WO | 1990/010898 | A1 | |
| | | | | EP | 432267 | A1 | |
| | | | | EP | 708390 | A2 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012074007 A

- WO 2021157669 A